# EUROPEAN PATENT SPECIFICATION

(11) **EP 2 573 146 B1**
(45) Date of publication and mention of the grant of the patent: **30.11.2016**
(21) Application number: 12183684.5
(22) Date of filing: 10.09.2012
(51) Int. Cl.: C09D 11/10, C09D 11/324, C09D 11/101

(54) **INK COMPOSITION FOR INK JET RECORDING, INK PACK, AND INK JET RECORDING METHOD**
TINTENZUSAMMENSETZUNG FÜR TINTENSTRAHLAUFZEICHNUNG, TINTENPAKET UND TINTENSTRAHLAUFZEICHNUNGSVERFAHREN
COMPOSITION D'ENCRE POUR L'ENREGISTREMENT À JET D'ENCRE, PAQUET D'ENCRE ET PROCÉDÉ D'ENREGISTREMENT À JET D'ENCRE

(30) Priority: 22.09.2011 JP 2011207066
(43) Date of publication of application: 27.03.2013
(73) Proprietor: Fujifilm Corporation, Minato-ku Tokyo 106-8620 (JP)
(72) Inventor: Umebayashi, Tsutomu, Kanagawa, 258-8577 (JP)
(74) Representative: Hoffmann Eitle

(56) References cited:
- EP-A1- 1 502 935
- WO-A2-99/29787
- US-A1- 2006 132 566

## Description

### BACKGROUND OF THE INVENTION

### 1. Field of the Invention

The present invention relates to an ink composition for ink jet recording, an ink pack, and an ink jet recording method.

### 2. Description of the Related Art

Ink jet systems ejecting an ink composition from ink ejection holes as droplets are widely used in many printers for reasons such as being compact and inexpensive, and enabling image forming on a target recording medium without contact. Even among these ink jet systems, a piezo ink jet system using the deformation of a piezoelectric element to eject ink and a thermal ink jet system using a phenomenon of boiling the ink composition using thermal energy to eject the ink composition as droplets are characterized by having high resolution and an excellent high-speed printing characteristic.

In recent years, there has been development of commercial printing equipment and industrial printing equipment using ink jet printers without being confined to photo printing and document printing for home use or office use. In particular, the demand for wide format ink jet printers suitable for printing large advertisements to be pasted onto the walls of show windows, train station passages, as well as buildings and the like is continuing to grow rapidly.

For ink used in the wide format ink jet printers with respect to ink jet inks for home use or office use of the related art, there is a strong demand to have adhesiveness to a non-permeable target recording medium such as plastic and to not generate faults such as cracking or peeling in the printed matter during processing such as bending or cutting out. Further, since the printed matter is sometimes placed outdoors, there is a demand for excellent weather resistance in the pigment to be used. In addition, in comparison with compact inkjet printers widely used in photo printing and document printing of the related art, since the printing time of the wide format ink jet printers is long, there is a demand for high ejection reliability in the ink to be used. Therefore, it is necessary to keep changes in the viscosity or changes in the particle diameter of the ink over long periods of time as small as possible.

In recent years, as the ink jet ink technology used in wide format ink jet printers according to the above-described demand, the following examples may be exemplified.

With the object of improving the adhesion with respect to polyvinyl chloride, which is a base material widely used in large advertisements and the like, in JP2006-169419A, regarding active energy ray curable type ink jet inks formed of a pigment, a pigment dispersing agent, and an ethylenic double bond containing compound, there is disclosed an active energy ray curable type ink jet ink for a polyvinyl chloride sheet which is formed of a polyvinyl chloride insoluble compound, for which the ethylenic double bond containing compound does not dissolve, or hardly dissolves polyvinyl chloride at all, and a polyvinyl chloride soluble compound which dissolves polyvinyl chloride, and in which the polyvinyl chloride soluble compound is included in an amount of 20 to 75 mass% with respect to the polyvinyl chloride insoluble compound. In JP2008-19408A, there is disclosed an ink composition which contains (A) N-vinyl lactam, (B) a radical polymerizable compound, and (C) a polymerization initiator, in which the (A) N-vinyl lactam are included n an amount of 10 mass% or more of the total weight of the ink, and in which the weight content ratio of (A):(B) is 1:8.5 to 1:1.

Further, with the object of providing an excellent pigment dispersing agent for an oil-based ink jet in which there is no change in the physical properties of the pigment even in the long-term storage property, in JP2007-254700A, there is described a pigment dispersing agent for an oil-based ink jet which is a pigment dispersing agent containing a pigment and a solvent, in which the average particle diameter of the dispersion pigment is 30 to 90 nm, and in which the particle diameters exceeding 150 nm are less than 20% in terms of volume distribution. In addition, in WO2006/038458A, there is described an active ray curable type ink jet ink containing a dispersing agent which has both an acid value and an amine value and in which the acid value is greater than the amine value.

Further, in black ink, even in a case where the printed matter is placed outdoors, carbon black is widely used as a pigment for which the color resistance is small, that is, which is excellent in weather resistance. For example, in JP2004-27211A, there is provided an ink composition for ultraviolet ray curable type ink jet recording having excellent ejection stability and storage stability, which is formed of at least carbon black, a photopolymerizable compound and a photopolymerizable initiator, in which an ink composition for ultraviolet ray curable type ink jet recording contains a polymer dispersing agent having a basic absorbing group and a phthalocyanine sulfonic acid-based compound.

### SUMMARY OF THE INVENTION

An object of the present invention is to provide an ink composition for ink jet recording having excellent storage stability, an ink pack filled with the ink composition, and an ink jet recording method using the ink composition.

The above object has been achieved by the means described below. Preferable embodiments are also shown below.

The ink composition for ink jet recording of the present invention comprises a pigment, a pigment dispersing agent, a polymerizable compound, and a phthalocyanine sulfonic acid ammonium salt, wherein carbon black is contained as the pigment, wherein a basic polymeric dispersing agent is contained as the pigment dispersing agent, wherein N-vinyl caprolactam is contained in an amount of 15 mass% or more of the entire ink composition as the polymerizable compound, and wherein following (i) or (ii) is satisfied.
(i) The pH of the carbon black is 2.0 or more to 3.5 or less, and the amine value of the basic polymeric dispersing agent is 25 mg KOH/g or more to less than 40 mg KOH/g
(ii) The pH of the carbon black is 2.0 or more to 7.0 or less, and the amine value of the basic polymeric dispersing agent is 40 mg KOH/g or more to 50 mg KOH/g or less.

Preferably, the content of the basic polymeric dispersing agent is 20 mass% or more to 50 mass% or less with respect to 100 mass% of the pigment in the ink composition.

Also, preferably, the content of the carbon black is 3 mass% or more to 5 mass% or less of the entire ink composition.

Also, preferably, N-vinyl caprolactam is contained in an amount of 15 mass% or more to 80 mass% or less of the entire ink composition.

Also, preferably, the N-vinyl caprolactam is contained in an amount of 15 mass% or more to 30 mass% or less of the entire ink composition.

An ink pack of the present invention is the ink pack filled with the ink composition for ink jet recording of the present invention, in which the ink pack is an aluminum deposited plastic pouch.

An ink jet recording method of the present invention comprises (a¹) a step of ejecting the ink composition for ink jet recording of the present invention onto a target recording medium and (b¹) a step of curing the ink composition for ink jet recording by irradiating the ejected ink composition for ink jet recording with active radiation rays.

According to the present invention, an ink composition for ink jet recording having excellent storage stability, an ink pack filled with the ink composition, and an ink jet recording method using the ink composition are able to be provided.

Below, the present invention will be described in detail.

Here, in the specification, description of "lower limit to upper limit" represents "lower limit or more to upper limit or less" and description of "upper limit to lower limit" represents "upper limit or less to lower limit or more". In other words, these represent numerical ranges including the upper limit and the lower limit as end points. Further, "(component A) pigment" or the like also refers simply to "component A" or the like. Further, "(meth)acrylate" or the like is synonymous with "acrylate and/or methacrylate" or the like, and the same applies below.

### 1. Ink Composition For Ink Jet Recording

The ink composition for ink jet recording of the present invention (below, simply referred to as "ink composition" or "ink") contains a pigment, a pigment dispersing agent, a polymerizable compound, and a phthalocyanine sulfonic acid ammonium salt, contains carbon black as the pigment, contains a basic polymeric dispersing agent as the pigment dispersing agent, contains N-vinyl caprolactam (below referred to as "NVC") as the polymerizable compound in an amount of 15 mass% or more of the entire ink composition, and satisfies the following (i) or (ii).
(i) The pH of the carbon black is 2.0 or more to 3.5 or less, and the amine value of the basic polymeric dispersing agent is 25 mg KOH/g or more to less than 40 mg KOH/g.
(ii) The pH of the carbon black is 2.0 or more to 7.0 or less, and the amine value of the basic polymeric dispersing agent is 40 mg KOH/g or more to 50 mg KOH/g or less.

The ink composition of the present invention is a non-aqueous ink composition.

The ink composition of the present invention is preferably an oil-based ink composition capable of being cured by irradiating active radiation rays. in addition, the ink composition of the present invention is preferably a non-solvent type ink composition which does not contain volatile organic solvents. The "active radiation rays" are radiation rays capable of providing energy causing the generation of an initiating species in the ink composition by irradiation, and broadly include α rays, γ rays, X-rays, ultraviolet rays, visible light, and electron beams. Among these, ultraviolet rays and electron beams are preferable from the viewpoint of curing sensitivity and the availability of equipment, and ultraviolet rays are more preferable.

The ink composition for ink jet recording of the present invention contains carbon black as a pigment and contains N-vinyl caprolactam as the polymerizable compound in an amount of 15 mass% or more of the entire ink composition. The inventor of the present invention found that, in ink compositions containing carbon black and for which the content of N-vinyl caprolactam is comparatively great, there is a problem with the storage stability. More specifically, it was found that problems occur in which aggregated matter is generated by the storage and filtration defects are generated.

The present inventor, as a result of intensive study, found that the storage stability is improved by using a basic polymeric dispersing agent as the pigment dispersing agent, using phthalocyanine sulfonic acid ammonium salt as a dispersing assistant (synergist), and setting the pH of the carbon black and the amine value of the basic polymeric dispersing agent to a specific range, thus completing the present invention.

Here, in a case where the amine value of the basic polymeric dispersing agent is 25 mg KOH/g or more to less than 40 mg KOH/g, the pH of the carbon black is 2.0 or more to 3.5 or less, and in a case where the amine value of the basic polymeric dispersing agent is 40 mg KOH/g or more to 50 mg KOH/g or less, the pH of the carbon black is 2.0 or more to 7.0 or less.

### (Pigments)

The ink composition for ink jet recording of the present invention contains a pigment and, the pigment contains carbon black. Here, as the pigments, other pigments may be included in addition to carbon black.

### <Carbon Black>

In the ink composition for ink jet recording of the present invention, the pigment contains carbon black. In black ink including NVC, from the viewpoint of obtaining excellent storage stability, (i) In a case where the amine value of the basic polymeric dispersing agent is 25 mg KOH/g or more to less than 40 mg KOH/g, carbon black with the pH of 2.0 or more to 3.5 or less is used. (ii) In a case where the amine value of the basic polymeric dispersing agent is 40 mg KOH/g or more to 50 mg KOH/g or less, carbon black with the pH of 2.0 or more to 7.0 or less is used.

In the case of (i) described above, carbon black with the pH of less than 2.0 is generally difficult to obtain as a commercial product, and, since there is a concern that, if the acidity is increased, the dissolution of the NVC will be promoted, the lower limit of the pH is 2.0. Further, when the pH exceeds 3.5, coarse particles are generated during storage and the filtration property is degraded.

In the case of (i) described above, in consideration of the storage stability of the ink composition and the availability of the commercial products, the pH of the carbon black is 2.0 to 3.5, preferably 2.0 to 3.0.

In the case of (ii) described above, carbon black with the pH of less than 2.0 is generally difficult to obtain as a commercial product, and, since there is a concern that, if the acidity is increased, the dissolution of the NVC will be promoted, the lower limit of the pH is 2.0. Further, when the pH exceeds 7.0, coarse particles are generated during storage and the filtration property is degraded.

In the case of (ii) described above, in consideration of the storage stability of the above-described ink composition and the availability of the commercial products, the pH of the carbon black is 2.0 to 7.0, preferably 2.0 to 5.0, more preferably 2.0 to 3.5, and particularly preferably 2.0 to 3.0.

Here, the pH shown in the present invention is a value measured based on the standard method (ASTM D-1512) of pH measurement of carbon black.

The pH of the carbon black can be adjusted by surface processing the carbon black using a known method. Specifically, manufacturing can be performed by performing an oxidation process, for example, wet type surface processing methods performing immersion of the carbon black in an acidic solution such as an acetic acid solution or a sulfonic acid solution, or dry type surface processing methods such as an air oxidation method in which reaction is caused by contact with air under a high temperature atmosphere, a method bringing about contact with an oxidizing agent such as a mixed gas of nitrogen oxide including nitric acid and air, ozone; or the like, and a method performing ozone oxidation at low temperatures, after air oxidation under a high temperature. In addition, as will be described later, as the carbon black, there are commercially available ones for which the pH has already been adjusted.

In the present invention, in consideration of the inkjet suitability, the transparency with respect to strong color development and ultraviolet light, and the like, the primary average particle diameter of the carbon black is preferably 30 nm to 500 nm, and more preferably 50 nm to 200 nm.

In addition, from the viewpoint of obtaining a good dispersed liquidity property, the specific surface area of the carbon black is preferably in the range of 15 to 80 m²/g, and the DBP absorption oil amount (ASTM D 2414) of the carbon black is preferably in the range of 30 to 80 mL/100 g.

The carbon black having the above-described physical properties can be acquired as a commercial product from Mitsubishi Chemical Corporation, Tokai Carbon Corporation, Evonik Co. Ltd., and Cabot Corporation. In addition, since there are times when the pH varies according to the manufacturing lot, it is preferably used after confirming that the pH is the desired value.

In consideration of changes in the physical properties between manufacturing lots, the following carbon blacks are particularly suitable.

**Table 1**

| Pigment Name | Supply Source | pH |
|---|---|---|
| MA-100 | Mitsubishi Chemical Corp. | 3.5 |
| MA-77 | Mitsubishi Chemical Corp. | 2.5 |
| MA-8 | Mitsubishi Chemical Corp. | 3.0 |
| #1000 | Mitsubishi Chemical Corp. | 3.5 |
| #8300/F | Tokai Carbon Corp. | 5.0 |
| Special Black 4 | Evonik Co. Ltd. | 2.8 |
| Special Black 350 | Evonik Co. Ltd. | 4.2 |
| Nerox 305 | Evonik Co. Ltd. | 2.9 |
| Nerox 305 | Evonik Co. Ltd. | 2.8 |

| | | |
|---|---|---|
| pH: Value measured based on ASTM D1512 | | |

In the present invention, the preferable content of carbon black included in the ink composition for ink jet recording depends on the ink capacity in the printer to be used and the necessary color development density. Assuming an ink capacity of a general printer (thickness 10 to 40 µm) and a generally demanded color development density (1.5 to 2.0), the preferable content of carbon black is preferably 1 mass% to 10 mass%, more preferably 2 mass% to 8 mass% and even more preferably 3 mass% to 5 mass% with respect to the entire ink composition.

Here, in the present invention, carbon black of which the pH exceeds 7 may be used in combination; however, the content thereof is preferably 30 mass% or less of all the carbon black, more preferably 10 mass% or less, and it is even more preferable that carbon black of which the pH exceeds 7 is not contained.

### <Other Pigments>

In the present invention, as pigments, other pigments may be used in combination with the carbon black. The other pigments are not particularly limited; however, for example, the following numbered organic or inorganic pigments as described in the color index can be used.

As a red or magenta pigment, C. I. Pigment Red 3, (also referred to as "Pigment Red 3") 5, 19, 22, 31, 38, 42, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 202, 208, 216, 226, 257, C. I. Pigment Violet 3 (also referred to as "Pigment Violet 3"), 19, 23, 29, 30, 37, 50, 88, C. I. Pigment Orange 13 (also referred to as "Pigment Orange 13"), 16, 20, 36, as a blue or cyan pigment, C. I. Pigment Blue 1 (also referred to as "Pigment Blue 1"), 15, 15:1, 15:2, 15:3, 15:4, 15:6, 16, 17:1, 22, 27, 28, 29, 36, 60, as a green pigment, C. I. Pigment Green 7 (also referred to as "Pigment Green 7"), 26, 36, 50; as a yellow pigment, C. I. Pigment Yellow 1 (also referred to as "Pigment Yellow 1"), 3, 12, 13, 14, 17, 34, 35, 37, 55, 74, 81, 83, 93, 94, 95, 97, 108, 109, 110, 120, 137, 138, 139, 150, 153, 154, 155, 157, 166, 167, 168, 180, 185, 193; as a black pigment, C. I. Pigment Black 28 (also referred to as "Pigment Black 28"), 26; as a white pigment, C. I. Pigment White 6 (also referred to as "Pigment White 6"), 18, 21, and the like can be used depending on the purpose.

The content of the other pigments is preferably 50 mass% or less of all the pigments, more preferably 20 mass% or less, even more preferably 5 mass% or less, and particularly preferably zero. In other words, in the present invention, it is preferable that only carbon black be contained as a pigment.

### (Pigment Dispersing Agent)

### <Basic Polymer Dispersing Agent>

The ink composition for ink jet recording of the present invention contains a basic polymeric dispersing agent as a pigment dispersing agent.

Here, the basic polymeric dispersing agent is a polymeric dispersing agent having at least a basic group.

Examples of the basic groups include amino groups, imino groups, amide groups, imide groups, nitrogen-containing heterocyclic groups, and the like. In addition, the basic group may be in the main chain of the polymeric dispersing agent, may be in the side chain, or may be in both.

A dispersing agent particularly preferably used as the basic polymeric dispersing agent is a dispersing agent for which the amine value is 25 mg KOH/g or more to 50 mg KOH/g or less. It is preferable that the amine value be 25 mg KOH/g or more since the generation of filtration defects is further suppressed and the storage stability is increased. Meanwhile, it is preferable that the amine value be 50 mg KOH/g or less since the dissolution of the NVC during storage is suppressed, and the deterioration of the thickening and curing sensitivity, the generation of acetaldehyde, and the like are suppressed.

From the viewpoint of filtration stability and dissolution prevention of the NVC, a basic polymeric dispersing agent having an amine value of 40 mg KOH/g or more to 50 mg KOH/g or less is particularly preferable.

Here, the amine value was measured using the following procedure. The dispersing agent was dissolved in methyl isobutyl ketone, potentiometric titration was performed in a methyl isobutyl ketone solution of perchloric acid of 0.01 mol/L, and the value after conversion to mgKOH/g was set as the amine value. The potentiometric titration was measured using the automatic titrator COM-1500 manufactured by Hiranuma Industrial Co., Ltd.

As the molecular weight of the basic polymeric dispersing agent, a weight-average molecular weight of 10,000 to 200,000 is preferable from the viewpoint of dispersion stability of dispersion fluidity, and a particularly preferable range is 20,000 to 80,000. The weight average molecular weight is measured using GPC device under the following conditions.
Apparatus: HLC-8220GPC (manufactured by Tosoh Co. Ltd.)
Column : TSKgel Super AWM-H (manufactured by Tosoh Co. Ltd., three columns thereof are connected, 6.0 mm I.D. x 15 cm x 3)
Eluent: N-Methyl-Pyrrolidone (10mM LiBr)
Flow rate: 0.5mL/min
Sample concentration : 0.1 wt%
Amount of injection : 60 µL
Column temperature : 40°C
Detector: RI

Dispersing agents having the above-described physical properties can be acquired as commercial products from Ajinomoto Fine-Techno Co., Inc., Evonik Co. Ltd. (TEGODispers series), BYK Chemie GmbH (Disper BYK series, BYK series), BASF Corporation (EFKA series), Lubrizol Corporation (Solsperse series), and the like. In addition, since there are times when the amine value varies according to the manufacturing lot of the pigment, it is preferably used after confirming that the amine value is in the desired range.

In consideration of changes in the physical properties between manufacturing lots, the following product types are particularly preferably used.

**Table 2**

| Dispersing Agent Name | Supply Source | Amine Value |
|---|---|---|
| TEGODisper685 | Evonik Co. Ltd. | 37.4 mg KOH/g |
| EFKA7731 | BASF Corporation | 25.1 mg KOH/g |
| EFKA7701 | BASF Corporation | 40. mg KOH/g |
| Disperbyk 2155 | BYK Chemie GmbH | 48.0 mg KOH/g |
| Byk 9077 | BYK Chemie GmbH | 48.0 mg KOH/g |

With respect to 100 mass% of the pigment in the ink composition, the preferable content of the basic polymeric dispersing agent contained in the ink composition for ink jet recording of the present invention is preferably 15 mass% to 50 mass%, more preferably 20 mass% to 50 mass%, and particularly preferably 20 mass% to 40 mass%.

It is preferable that the content of the basic polymeric dispersing agent be in the above-described ranges since the filtration stability is excellent, and furthermore, the generation of the dissolution of the NVC is suppressed.

(Preferable Embodiments of the Carbon Black and the Basic Polymeric Dispersing Agent)

In the present invention, the pH of the carbon black and the amine value of the basic polymeric dispersing agent satisfy the following (i) or (ii).
(i) The pH of the carbon black is 2.0 or more to 3.5 or less, and the amine value of the basic polymeric dispersing agent is 25 mg KOH/g or more to less than 40 mg KOH/g.
(ii) The pH of the carbon black is 2.0 or more to 7.0 or less, and the amine value of the basic polymeric dispersing agent is 40 mg KOH/g or more to 50 mg KOH/g or less.

In relation to (i), in a case where the pH of the carbon black is low, since there are many acidic adsorption sites of the pigment surface, the effects of the present invention are realized even in a case where a basic polymeric dispersing agent with a comparatively low amine value (25 mg KOH/g or more to less than 40 mg KOH/g) is used.

On the other hand, in relation to (ii), in a case where the amine value of the basic polymeric dispersing agent is 40 mg KOH/g or more to 50 mg KOH/g or less, since the amine value is high, the effects of the present invention are realized even if a wide range is selected as the pH of the carbon black.

### (Polymerizable Compound)

The ink composition for ink jet recording of the present invention contains N-vinyl caprolactam in an amount of 15 mass% or more of the entire ink composition as a polymerizable compound. By including 15 mass% or more of N-vinyl caprolactam, adhesion to substrates widely used in the field of wide format outdoor advertisements such as polyvinyl chloride (PVC) or polycarbonate (PC) can be obtained. Here, other than the N-vinyl caprolactam, the ink composition for ink jet recording contains carbon black pigment, a dispersing agent, a synergist, and, according to necessity, a polymerizable compound other than the N-vinyl caprolactam, an initiator, and other additives. Therefore, when considering the balance between adhesion, storage stability, curing sensitivity, and ink jet ejection reliability, the content of N-vinyl caprolactam is preferably 15 mass% or more to 80 mass% or less of the entire ink composition, and more preferably 15 mass% or more to 50 mass% or less. In consideration of the balance of adhesion and storage stability, which is a particularly important issue in the present invention, 15 mass% or more to 30 mass% or less is a particularly preferably range.

As described below, in a case where the pigment dispersion is implemented, the use of a polymerizable compound other than N-vinyl caprolactam as the medium in the dispersing agent is preferable. Therefore, the ink composition for ink jet recording of the present invention preferably contains a polymerizable compound other than the N-vinyl caprolactam. Specifically, a compound having at least one ethylenically unsaturated group in the molecule, in particular, a (meth)acrylate compound is preferably contained as the polymerizable compound. In addition, by combining the N-vinyl caprolactam and the (meth)acrylate compound, since the curing sensitivity is improved, it is preferable to include the meth(acrylate) compound even from this point of view. As the meth(acrylate) compound, an acrylate compound is more preferable. Here, the description respectively includes "meth(acrylate)" in cases where both or either of "acrylate", "methacrylate" are indicated, and "meth(acryl)" in cases where both or either of "acryl", "methacryl" are indicated.

Specifically, the monofunctional (meth)acrylate compounds include 2-phenoxyethyl (meth)acrylate, cyclic trimethylpropane formal (meth)acrylate, 2-(2-ethoxyethoxy)ethyl (meth)acrylate, norbornyl (meth)acrylate, isobornyl (meth)acrylate, isophoryl (meth)acrylate(3,3,5-trimethyl cyclohexyl (meth)acrylate), 2-ethylhexyl (meth)acrylate, 2-hydroxyethyl (meth)acrylate, butoxyethyl (meth)acrylate, carbitol (meth)acrylate, cyclohexyl (meth)acrylate, tetrahydrofurfuryl (meth)acrylate, benzyl (meth)acrylate, methyl (meth)acrylate, n-butyl (meth)acrylate, isodecyl (meth)acrylate, decyl (meth)acrylate, lauryl (meth)acrylate, allyl (meth)acrylate, glycidyl (meth)acrylate, dimethylaminomethyl (meth)acrylate, and the like.

Examples of the multi-functional (meth)acrylate compounds preferably include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, dipropylene glycol di(meth)acrylate, tripropylene glycol di(meth)acrylate, tetrapropylene glycol di(meth)acrylate, polypropylene glycol di(meth)acrylate, neopentyl glycol (meth)acrylate, ethoxylated neopentyl glycol diacrylate, propoxylated neopentyl glycol diacrylate, 1,6-hexanediol di(meth)acrylate, pentaerythritol tri(meth)acrylate, pentaerythritol tetra(meth)acrylate, dipentaerythritol tetra(meth)acrylate, trimethylol ethane tri(meth)acrylate, trimethylolpropane tri(meth)acrylate, tetramethylolmethane tetra(meth)acrylate, bis (4-(meth)acryloxy polyethoxy phenyl)propane, oligoester(meth)acrylate, and 2,2-bis(4-(meth)acryloxy polyethoxyphenyl) propane.

Among these, functional or bifunctional acrylates such as 2-phenoxyethyl acrylate, cyclic trimethylpropane formaric acrylate, dipropylene glycol di(meth)acrylate, propoxylated neopentyl glycol diacrylate, 2-(2-ethoxyethoxy)ethyl acrylate, isodecyl acrylate, decyl acrylate, lauryl acrylate, tetrahydrofurfuryl acrylate, isobornyl acrylate, isophoryl acrylate, 1,6-hexane diol diacrylate, 3-methyl-1,5-pentanediol diacrylate, dipropylene glycol diacrylate, propoxylated neopentyl glycol diacrylate, or the like are preferable from the viewpoints of film properties, and obtaining a viscosity suitable for ink for ink jet recording, and 2-phenoxyethyl acrylate, cyclic trimethylpropane formaric acrylate, dipropylene glycol di(meth)acrylate, and propoxylated neopentyl glycol diacrylate are more preferable.

More specifically, commercial products described in the "Cross-Linking Agent Handbook" by Shinzo Yamashita (1981, Taiseisha); The "UV·EB Curing Handbook (raw materials edition)" edited by Kiyoshi Katou (1985, polymer publication association); "Applications and Market of UV·EB Curing Techniques" edited by Radtech Research Association, page 79 (1989, CMC Publishing Co.,Ltd.); "Polyester Resin Handbook" written by Eiichiro Takiyama (1988, Nikkan Kogyo Shimbun, Ltd.); or the like, or radical-polymerizable or cross-linking monomers, oligomers and polymers known in the industry can be used.

The molecular weight of the radical polymerizable compound is preferably 80 to 2,000, more preferably 80 to 1,000, and even more preferably 80 to 800.

The ink composition of the present invention preferably also contains an oligomer having a radical polymerizable group. As the radical polymerizable group, an ethylenically unsaturated group is preferable and a (meth)acryloxy group is more preferable.

Examples of the oligomers having a radical polymerizable group can include an olefin-based oligomer (ethylene oligomer, propylene oligomer, butene oligomer, or the like), a vinyl-based oligomer (styrene oligomer, vinyl alcohol oligomer, vinyl pyrrolidone oligomer, acrylate oligomer, methacrylate oligomer, or the like), a diene-based oligomer (butadiene oligomer, chloroprene rubber, pentadiene oligomer, or the like), a ring-opening polymerization-based oligomer (di-, tri-, tetra-ethylene glycol, polyethylene glycol, polyethyl imine or the like), a polyaddition-based oligomer (oligo ester acrylate, polyamide oligomer, polyisocyanate oligomer), an addition condensation oligomer (phenol resin, amino resin, xylene resin, ketone resin, or the like) and the like having a radical polymerizable group. Among these, oligo ester (meth)acrylates are preferable, in which, urethane (meth)acrylate, polyester (meth)acrylate, and epoxy (meth)acrylate are more preferable, and urethane meth(acrylate) is even more preferable.

Examples of the urethane (meth)acrylates may preferably include aliphatic urethane (meth)acrylate, and aromatic urethane (meth)acrylate, and aliphatic urethane meth(acrylate) is more preferably included.

Further, the urethane meth(acrylate) is preferably a tetra- or lower functional urethane meth(acrylate) and more preferably a bi- or lower functional urethane meth(acrylate).

By including urethane (meth)acrylate, an ink composition can be obtained for which the adhesion to the substrate is excellent, and the curing property is excellent.

Regarding the oligomers, the Oligomer Handbook (edited by Junji Yoshikawa, The Chemical Daily Co., Ltd.) can be referred to.

In addition, examples of commercially available products of the oligomers can include the ones shown below.

Examples of the urethane meth(acrylate) include R1204, R1211, R1213, R1217, R1218, R1301, R1302, R1303, R1304, R1306, R1308, R1901, R1150, and the like manufactured by Dai-ichi Kogyo Seiyaku Co., Ltd., the EBECRYL series manufactured by Daicel-Cytec Co. Ltd., (for example, EBECRYL 230, 270, 4858, 8402, 8804, 8807, 8803, 9260, 1290, 1290K, 5129, 4842, 8210, 210, 4827, 6700, 4450, and 220), NK Oligo U-4HA, U-6HA, U-15HA, U-108A, U200AX, and the like manufactured by Shin-Nakamura Chemical Co. Ltd., and Aronix M-1100, M-1200, M-1210, M-1310, M-1600, M-1960, and the like manufactured by Toagosei Co. Ltd.

Examples of the polyester (meth)acrylate include the EBECRYL series manufactured by Daicel-Cytec Co. Ltd., (for example, EBECRYL 770, IRR467, 81, 84, 83, 80, 675, 800, 810, 812, 1657, 1810, IRR302, 450, 670, 830, 870, 1830, 1870, 2870, IRR267, 813, IRR483, 811, and the like), and Aronix M-6100, M-6200, M-6250, M-6500, M-7100, M-8030, M-8060, M-8100, M-8530, M-8560, M-9050, and the like manufactured by Toagosei Co. Ltd.

In addition, examples of the epoxy (meth)acrylates include the EBECRYL series manufactured by Daicel-Cytec Co. Ltd., (for example, EBECRYL 600, 860, 2958, 3411, 3600, 3605, 3700, 3701, 3703, 3702, 3708, RDX63182, 6040 and the like), and the like.

One kind of the oligomer having a radical polymerizable group may be used alone, or two types or more may be used together.

With respect to the total mass of the ink composition, as the content of the oligomers having a radical polymerizable group in the ink composition of the present invention, 0.1 to 50 mass% is preferable, 0.5 to 20 mass% is more preferable, and 1 to 10 mass% is even more preferable.

In the present invention, as the content of the monofunctional radical polymerizable monomers including N-vinyl caprolactam, from the viewpoints of curability and film flexibility, 10 to 90 mass% of the entire polymerizable compound is preferable, 15 to 85 mass% is more preferable, and 20 to 80 mass% is even more preferable.

In the present invention, as the total amount of the polymerizable compound in the entire ink composition, from the viewpoints of curability and adhesion, 50 to 95 mass% of the entire ink composition is preferable, 60 to 90 mass% is more preferable, and 70 to 90 mass% is even more preferable.

### (Phthalocyanine sulfonic acid ammonium salt)

The ink composition for ink jet recording of the present invention contains a phthalocyanine sulfonic acid ammonium salt as a synergist (dispersing assistant).

The content of the phthalocyanine sulfonic acid ammonium salt is preferably 0.5 to 10 mass%, and more preferably 1 to 4 mass% with respect to 100 mass% of the carbon black. If the content of the phthalocyanine sulfonic acid ammonium salt is within the above-described ranges, it is preferable from the viewpoints of viscosity and filtration stability. Further, it is preferable as the filtration during the ink manufacturing is also excellent.

Solsperse 5000 (manufactured by Lubrizol Corporation), Efka 6745, or the like, which are available as commercial products, can be preferably used as the phthalocyanine sulfonic acid ammonium salt.

### (Polymerization Initiator)

The ink composition of the present invention preferably contains a polymerization initiator.

As a polymerization initiator which can be used in the present invention, well-known polymerization initiators can be used.

The polymerization initiators which can be used in the present invention may be used alone as one kind, or two kinds or more may be used in combination. Further, a cationic polymerization initiator and a radical polymerization initiator may be used in combination; however, it is preferable that at least a radical polymerization initiator be contained.

The polymerization initiators which can be used in the present invention are compounds absorbing external energy and generating a polymerization initiating species. The external energy used in order to initiate the polymerization is broadly divided into heat and active radiation rays, for which thermal polymerization initiators and photopolymerization initiators are used respectively. Examples of the active radiation rays can include γ rays, β rays, electron beams, ultraviolet rays, visible light, and infrared rays.

### <Radical Polymerization Initiator>

The radical polymerization initiators which can be used in the present invention are not particularly limited, and known radical polymerization initiators can be used.

Examples of the radical polymerization initiators which can be used in the present invention include (a) aromatic ketones, (b) acyl phosphine compounds, (c) aromatic onium salt compounds, (d) organic peroxide, (e) thio compounds, (f) hexaarylbiimidazole compounds, (g) ketoxime ester compounds, (h) borate compounds, (i) azinium compounds, (j) metallocene compounds, (k) active ester compounds, (1) compounds having carbon-halogen bonds, (m) alkylamine compounds, and the like. These radical polymerization initiators may be used alone or in combination with the above-described compounds of the (a) to (m).

Among these, using (a) aromatic ketones and (b) acyl phosphine compounds is preferable.

As (a) aromatic ketones, α-hydroxy ketone compounds and α-amino ketone compounds are preferable.

Examples of the α-hydroxy ketone compounds include, for example, 1-[4-(2-hydroxyethoxy)phenyl]-2-hydroxy-2-methyl-1-propane-1-one, 2-hydroxy-2-methyl-1-phenyl-propan-1-one, 1-hydroxycyclohexyl phenyl ketone, and the like.

Examples of the α-amino ketone compounds include, for example, 2-methyl-1-phenyl-2-morpholino propan-1-one, 2-methyl-1-[4-(hexyl)phenyl]-2-morpholino propan-1-one, 2-ethyl-2-dimethylamino-1-(4-morpholino phenyl)-butane-1-one, and the like.
(b) As the acyl phosphine compound, an acyl phosphine oxide compound is preferable.

Preferable examples of acyl phosphine oxide compounds include monoacyl phosphine oxide compounds, bisacylphosphine oxide compounds, and the like.

As the monoacyl phosphine oxide compound, a well-known monoacyl phosphine oxide compound can be used. For example, the monoacyl phosphine oxide compounds disclosed in JP1985-8047B (JP-S60-8047B) and JP1988-40799B (JP-S63-40799B) may be exemplified.

As the bisacylphosphine oxide compounds, a well-known bisacylphosphine oxide compound can be used. For example, the bisacylphosphine oxide compounds described in JP1991-101686A (JP-H03-101686A), JP1993-345790A (JP-H05-345790A) and JP1994-298818A (JP-H06-298818A) may be exemplified.

In the ink composition of the present invention, it is preferable to include an acyl phosphine oxide compound, more preferable to use an acyl phosphine compound and an α-hydroxy ketone compound and/or an α-amino ketone compound in combination, and even more preferable to use an acyl phosphine compound, an α-hydroxy ketone compound and an α-amino ketone compound in combination. With the above-described combination, an ink composition with excellent curability and blocking resistance can be obtained.

With respect to the total mass of the ink composition, as the content of the polymerization initiator in the ink composition of the present invention, 0.1 to 20 mass% is preferable, 0.5 to 18.0 mass% is more preferable, and 1.0 to 15.0 mass% is even more preferable. When the added amount of the polymerization initiator is in the above-described range, the curability is excellent and furthermore, it is appropriate from the viewpoint of reducing the surface tackiness.

In addition, the content ratio (mass ratio) of the polymerization initiator and the polymerizable compound in the ink composition of the present invention is preferably polymerization initiator:polymerizable compound = 0.5:100 to 30:100, more preferably 1:100 to 15:100, and even more preferably 2:100 to 10:100.

### (Sensitizer)

Since the ink composition of the present invention absorbs specific active energy rays and promotes the dissolution of the radical polymerization initiator, it is preferable to include a sensitizer.

Examples of the sensitizer include, for example, polynuclear aromatics (for example, pyrene, perylene, triphenylene, 2-ethyl-9,10-dimethoxy-anthracene, or the like), xanthenes (for example, fluorescein, eosin, erythrosine, rhodamine B, rose bengal, or the like), cyanines (for example, thiacarbocyanine, oxacarbocyanine, or the like), merocyanines (for example, merocyanine, carbo merocyanine or the like), thiazine type (for example, thionine, methylene blue, toluidine blue, or the like), acridines (for example, acridine orange, chloro flavin, acriflavine and the like), anthraquinones (for example, anthraquinone, or the like), squarylium (for example, squarylium or the like), coumarins (for example, 7-diethylamino-4-methyl coumarin, or the like), and the like.

As the sensitizer in the present invention, the compounds represented by the following formulas (vi) to (x) and (xiv) may be exemplified as preferable.

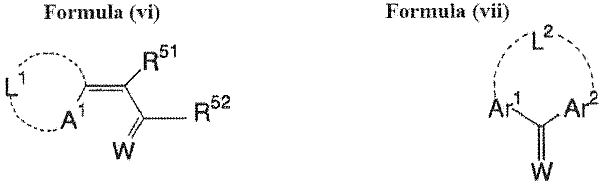

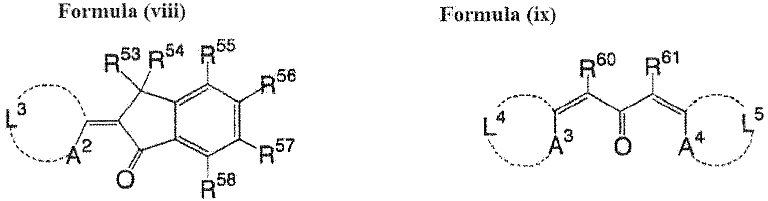

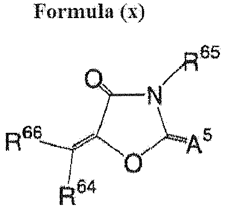

In formula (vi), A¹ represents a sulfur atom or NR⁵⁰, and R⁵⁰ represents an alkyl group or an aryl group. L¹ represents a non-metallic atomic group which forms the basic nucleus of the dye together with adjacent A¹ and adjacent carbon atoms. R⁵¹ and R⁵² each independently represent a hydrogen atom or a monovalent non-metallic atomic group, R⁵¹ and R⁵² are bonded to each other and may form an acidic nucleus of the dye. W represents an oxygen atom or a sulfur atom.

In the formula (vii), Ar¹ and Ar² each independently represent aryl groups, and are linked through bonds according to L². L² represents -O- or -S-. W has the same meaning as that shown in formula (vi).

In formula (viii), A² represents a sulfur atom or NR⁵⁹, and R⁵⁹ represents an alkyl group or an aryl group. L³ represents a non-metallic atomic group which forms the basic nucleus of the dye together with adjacent A² and carbon atoms. R⁵³, R⁵⁴, R⁵⁵, R⁵⁶, R⁵⁷, and R⁵⁸ each independently represent a group of a monovalent non-metallic atomic group.

In the formula (ix), A³ and A⁴ each independently represent -S-, -NrR⁶²-, or -NR⁶³-, and R⁶² and R⁶³ each independently represent a substituted or an unsubstituted alkyl group, or a substituted or an unsubstituted aryl group. L⁴ and L⁵ each independently represent a non-metallic atomic group which forms the basic nucleus of the dye together with adjacent A³ and A⁴ and adjacent carbon atoms. R⁶⁰ and R⁶¹ each independently represent a hydrogen atom or a monovalent non-metallic atomic group. R⁶⁰ and R⁶¹ may be bonded together to form an aliphatic or aromatic ring.

In formula (x), R⁶⁶ represents an aromatic ring or a hetero ring which may have a substituent. A⁵ represents an oxygen atom, a sulfur atom or -NR⁶⁷-, R⁶⁴, R⁶⁵, and R⁶⁷ each independently represent a hydrogen atom or a monovalent non-metallic atomic group. R⁶⁷ and R⁶⁴, and R⁶⁵ and R⁶⁷ may be mutually bonded to form an aliphatic or an aromatic ring.

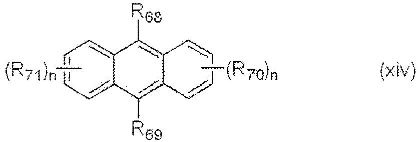

In the formula (xiv), R₆₈ and R₆₉ each independently represent a hydrogen atom or a monovalent non-metallic atomic group. R₇₀ and R₇₁ each independently represent a hydrogen atom or a monovalent non-metallic atomic group, and n represents an integer of 0 to 4. When n is 2 or more, R₇₀ and R₇₁ can be bonded to each other in order to form an aliphatic or an aromatic ring.

Among these, the sensitizer is preferably an anthracene derivative represented by formula (xiv). Since an ink composition having excellent curability can be obtained by using an anthracene derivative as the sensitizer, it is preferable.

With respect to the total mass of the ink composition, as the content of the sensitizer in the ink composition of the present invention, from the viewpoint of the colorability of the ink, 0.01 to 20 mass% is preferable, 0.1 to 15 mass% is more preferable, and 0.5 to 10 mass% is even more preferable.

In addition, the sensitizer may be used alone or two kinds or more may be used in combination.

In addition, from the viewpoints of improvement of the dissolution rate of the polymerization initiator and transmission of irradiated light, as mass ratios, the content ratio of the sensitizer and polymerization initiator in the ink composition is preferably content of polymerization initiator/content of sensitizer = 100 to 0.5, more preferably 50 to 1, and even more preferably 10 to 1.5.

### (Other Components)

The ink composition used in the present invention may include, as necessary, in addition to each component, a surfactant, a co-sensitizer, an ultraviolet absorber, an antioxidant, an antifading agent, conductive salts, solvents, polymer compounds, basic compounds and the like. These are disclosed in JP2009-221416A and can also be used in the present invention.

In addition, the ink composition of the present invention preferably contains a polymerization inhibitor from the viewpoints of storability and suppressing head clogging.

The polymerization inhibitor is preferably added in an amount of 200 to 20,000 ppm with respect to the entire ink composition of the present invention.

Examples of the polymerization inhibitor include nitroso-based polymerization inhibitors, hindered amine-based polymerization inhibitors, hydroquinone, benzoquinone, p-methoxy phenol, TEMPO, TEMPOL, Cuperon A1, or the like.

In addition, the ink composition of the present invention may contain well-known coloring agents other than benzimidazolone-based pigments and bis-acetoacetanilide-based pigments; however, it is preferable not to include coloring agents other than benzimidazolone-based pigments and bis-acetoacetanilide-based pigments.

### (Physical Properties of Ink)

The viscosity and surface tension of the ink composition for ink jet recording of the present invention are preferably in ranges suitable for ejection using an ink jet head mounted on the printer to be used. In general, assuming use with a widely used piexo-type ink jet head, a viscosity of 6 to 30 mPa·s (25°C) is preferable, and 15 to 25 mPa·s is particularly preferable.

In addition, the viscosity at the ejection temperature (preferably 25 to 80°C, more preferably 25 to 50°C) is preferably 3 to 15 mPa·s and more preferably 3 to 13 mPa·s. The ink composition of the present invention is preferably adjusted to a suitable composition ratio in order that the viscosity is in the above-described ranges. By setting a high viscosity at room temperature, even in a case where a porous target recording medium (support body) is used, the penetration of the ink composition into the target recording medium can be avoided and the uncured monomers can be reduced. Further, ink blurring at the time of ink droplet landing of the ink composition can be inhibited, and, as a result, the image quality is improved, which is preferable.

On the other hand, the surface tension at 25°C is preferably 20 to 40 mN/m, and particularly preferably 28 to 38 mN/m. In a case where recording is performed to various target recording media such as polyolefin, PET, coated paper, uncoated paper, or the like, from the viewpoint of blurring and penetration, 20 mN/m or more is preferable, and, in terms of wettability, 40 mN/m or less is preferable.

### 2. Container for Storing Ink (Ink Pack)

As the storage state of the ink of the present invention, it is preferable to keep the contact with air during storage to a minimum and in a light-shielded state. From the analysis so far, it is understood that, when black ink including the NVC is stored in an oxidized atmosphere, the viscosity and filtration stability are greatly deteriorated. Based on this reason, in order to obtain excellent stability, it is preferable to keep the contact with air to a minimum. Maintaining the light-shielded state is to prevent gelation by a photopolymerization reaction during storage.

As a container that can be preferably used, in particular, an aluminum deposited plastic pouch is preferable. The inner wall (wall in contact with the ink) of the aluminum deposited plastic pouch preferably uses a material having an excellent anti-solvent property such as PP, PE, and PTFE.

For example, examples of commercially available ink packs include the BiLL PAK Series (Sun A Kaken Co., Ltd.), the flow pack series UV (manufactured by Fujimori Kogyo Co., Ltd.), and the like. An aluminum deposited plastic pouch can also be obtained from SJ-D5 Inc., or Showa Marutsutsu Co., Ltd.

That is, it is preferable that the ink pack of the present invention be stored in an aluminum deposited plastic pouch in a state where there are no bubbles in the inner portion of the pouch. The presence or absence of bubbles inside the ink can be confirmed by investigation using a syringe. A state in which there are no visible bubbles when the ink is drawn out into the syringe is preferable.

### 3. Manufacturing Method of Ink Composition for Ink Jet Recording

As the manufacturing method of an ink composition for ink jet recording of the present invention, it is preferable that manufacturing be performed with a manufacturing method configured by at least the steps of (1) to (4) described below.
(1) A step of adding a basic polymeric dispersing agent and a phthalocyanine sulfonic acid ammonium salt to a liquid form of an organic solvent and/or a polymerizable compound, stirring, and preparing a dispersing agent diluted solution A
(2) A step of adding a carbon black pigment to the dispersing agent diluted solution A, stirring, and preparing a preliminary dispersion liquid A in which the pigment density is 20 mass% to 40 mass%
(3) A step of performing a pigment dispersion process on the preliminary dispersion liquid A, and preparing a pigment dispersing agent A in which the volume average particle diameter of the pigment is 300 nm or less
(4) A step of adding and diluting the pigment dispersing agent A in a liquid configured of N-vinyl caprolactam, other polymerizable compounds, a polymerization initiator, and additives in a re-dispersing step

Here, as the organic solvent and/or polymerizable compound used in step (1), the previously stated polymerizable compounds are preferable. However, since the organic solvent and/or polymerizable compound are main components of the dispersion medium, having a low viscosity, specifically, having a viscosity of 15 mPa·s or less in a working environment (5 to 30°C) is preferable in terms of obtaining a uniform dispersion. Since there are cases where N-vinyl caprolactam, which is one of the main components of the ink composition of the present invention, is a solid in a working environment (5 to 30°C), it cannot be preferably used.

As the polymerizable compound used in step (1), in particular, functional or bifunctional acrylates such as 2-phenoxyethyl acrylate, 2(2-ethoxyethoxy)ethyl acrylate, octyl acrylate, isodecyl acrylate, decyl acrylate, lauryl acrylate, tetrahydrofurfuryl acrylate, isobornyl acrylate, cyclic trimethylpropane formaric acrylate, isoforyl acrylate, 1,6-hexanediol diacrylate, 3-methyl-1,5-pentanediol diacrylate, dipropylene glycol diacrylate, propoxylated neopentyl glycol diacrylate are preferable.

The means for stirring in step (1) is not particularly limited as long as the basic polymeric dispersing agent is dissolvable in the organic solvent and/or the polymerizable compound; however, methods using a magnetic stirrer, a mixer with stirring blades attached, or the like are easy and efficient means. In order to manufacture greater amounts in a shorter time, a mixer with stirring blades attached is preferable.

As the container used in the stirring, pouch types or continuous types are available as commercial products; however, the latter is capable of preparing a uniform dispersing agent diluted solution A in a shorter time. Further, as the type of stirring blades, propeller types, axial-flow turbine types, emission flow turbine types, anchor types, and the like can be suitably used. In addition, mixers and the like of a saw-tooth blade type, a closed-type rotor type, a rotor/stator type, and the like can also be used. Here, in the embodiments of the present invention, in step (1), a rotor/stator type mixer (batch container) manufactured by Silverson UK Co., Ltd. was used.

As the means for stirring in step (2), from the viewpoint of omitting a cleaning step, it is preferable to use the same means as step (1), and the above-described means can be preferably used. In the embodiments of the present invention, in step (2), a rotor/stator type mixer (batch container) manufactured by Silverson UK Co., Ltd. was used.

In the pigment dispersion process in step (3), various well-known dispersion means can be adopted, for example, dispersion apparatuses such as a ball mill, a sand mill, an attritor, a roll mill, a jet mill, a homogenizer, a paint shaker, a kneader, an agitator, a Henschel mixer, a colloid mill, an ultrasonic homogenizer, a pearl mill, a wet jet mill, and a bead mill can be preferably used. Among these, the use of a media dispersion apparatus using balls or beads is more preferable, and the use of a bead mill dispersion apparatus is even more preferable.

The re-dispersing step of step (4) is one step configuring the manufacturing steps of the ink composition for ink jet recording, and is also known as a step in which a pigment dispersion (also referred to as a "mill base", "concentrated ink", and the like) having a pigment density prepared in advance at a density higher than the pigment density of the final product is diluted to the pigment density of the final product. Typically, since dilution, that is, re-dispersing is performed within several hours to several months of storage from the manufacture of the mill base, there is a need to apply a certain amount of shearing (force) and also to perform stirring for some time. In cases where the shearing force of the stirring is insufficient, or the stirring time is insufficient, the structured pigment aggregated matter in the storage period cannot be completely dispersed, that is, re-dispersing cannot be performed, and the density of the coarse particles is increased. In such a case, problems such as ejection defects or filtration defects are caused. In addition, as means for stirring, the use of the same means as step (1) and step (2) is preferable.

### 4. Ink Jet Recording Method, Ink Jet Recording Apparatus, and Printed Matter

The ink jet recording method of the present invention is a method ejecting the ink composition for ink jet recording of the present invention onto a target recording medium (support body, recording material or the like) set for ink jet recording, irradiating the ink composition for ink jet recording ejected onto the target recording medium with active energy rays, and curing the ink composition for ink jet recording to form an image.

More specifically, the ink jet recording method of the present invention preferably includes (a¹) a step of ejecting the ink composition for ink jet recording of the present invention onto a target recording medium and (b¹) a step of curing the ink composition for ink jet recording by irradiating the ejected ink composition for ink jet recording with active energy rays.

By including the above-described steps (a¹) and (b¹), the ink jet recording method of the present invention forms an image using the cured ink composition for ink jet recording on the target recording medium.

Further, the printed matter obtained using the ink composition of the present invention is preferably printed matter recorded using the ink jet recording method of the present invention.

In step (a1) in the ink jet recording method of the present invention, an ink jet recording apparatus as described in detail below can be used.

### (Ink Jet Recording Apparatus)

The ink jet recording apparatuses which can be used in the ink jet recording method of the present invention are not particularly limited and a well-known ink jet recording apparatus capable of achieving the desired resolution can be arbitrarily selected and used. That is, with a known ink jet recording apparatus including a commercially available product, ejection of the ink composition onto the target recording medium can be performed in the step (a¹) of the ink jet recording method of the present invention.

Examples of the ink jet recording apparatus which can be used in the present invention include apparatuses including, for example, ink supply systems, temperature sensors, and active energy ray sources.

The ink supply system, for example, is formed of a source tank including the ink composition of the present invention, a supply pipe, an ink supply tank immediately before the ink jet head, a filter and a piezo-type ink jet head. The piezo-type ink jet head is capable of driving so as to be able to eject multi-size dots of preferably 1 to 100 pl and more preferably 8 to 30 pl, at a resolution of preferably 320 x 320 to 4,000 x 4,000 dpi, more preferably 400 x 400 to 1,600 x 1,600 dpi, and even more preferably 720 x 720 dpi. Here, the dpi in the present invention represents the number of dots per 2.54 cm.

Regarding the ink composition of the present invention, since it is preferable that the ink composition to be ejected be set to a constant temperature, it is preferable that means for stabilizing the ink composition temperature be provided in the ink jet recording apparatus. The piping system from the ink tank (the intermediary tank in a case where there is such a tank) to the nozzle emission surface and all of the members are sites to be set to a constant temperature. That is, insulation and heating can be performed from the ink supply tank to the ink jet head portion.

The methods of temperature control are not particularly limited; however, for example, it is preferable to provide a plurality of temperature sensors in sites at each pipe, and perform heating control according to the ink flow amount and the temperature of the environment. The temperature sensors can be provided in the vicinity of the nozzles of the ink supply tank and the ink jet head. In addition, the head unit to be heated is preferably thermally blocked or insulated in order that the apparatus main body is not influenced by the temperature from the outside air. In order to shorten the start up time of the printer required for heating, or in order to reduce the thermal energy loss, it is preferable to provide insulation from other sites and to decrease the heat capacity of the entire body of the heating unit.

The ejection of the ink composition of the present invention using the ink jet recording apparatus described above is preferably performed after heating the ink composition to preferably 25 to 80°C, and more preferably 25 to 50°C and lowering the viscosity of the ink composition to preferably 3 to 15 mPa·s, and more preferably 3 to 13 mPa·s. In particular, as the ink composition of the present invention, when one in which the ink viscosity is 50 mPa·s or less at 25°C is used, it is preferable since ejection can be favorably performed. By using this method, high ejection stability can be realized.

Since radiation ray curable-type ink compositions for ink jet recording which are capable of being cured by active radiation rays as in the ink composition of the present invention generally have a higher viscosity than aqueous ink compositions normally used in ink jet recording, the changes in viscosity according to temperature changes at the time of ejection are large. The changes in the viscosity of the ink composition are greatly influenced by changes in the droplet size and changes in the droplet ejection speed, and can lead to deterioration of the image quality. Accordingly, there is a need to keep the temperature of the ink composition at the time of ejection constant as much as possible. Thus, in the present invention, it is suitable that the control band of the temperature of the ink composition be preferably ±5°C from a set temperature, more preferably ±2°C, and even more preferably ±1°C.

Next, description will be given of (b¹) the step of irradiating the ejected ink composition with active energy rays and curing the ink composition.

The ink composition ejected onto the target recording medium is cured by the irradiation of active energy rays. This is because the radical polymerization initiator included in the ink composition of the present invention is dissolved by the irradiation of the active energy rays, the polymerization initiating species such as a radical, acid, or the like is generated, and the polymerization reaction of the polymerizable compound is started and promoted by the functions of the initiating species. At this time, if a polymerization initiator and a sensitizer are present in the ink composition, the sensitizer in the system absorbs active energy rays and enters an excited state, the dissolution of the polymerization initiator is promoted by the contact with the polymerization initiator, and a curing reaction of higher sensitivity can be achieved.

Here, α, rays, γ rays, electron beams, X-rays, ultraviolet rays, visible light, infrared light, or the like can be used as the active energy rays to be used. The peak wavelength of the active energy rays also depends on the absorption characteristic of the sensitizer; however, 200 to 600 nm is preferable, 300 to 450 nm is more preferable, 320 to 420 nm is even more preferable, and infrared light in which the peak wavelength of the active energy rays is in the range of 340 to 400 nm is particularly preferable.

In addition, the polymerization initiator system of the ink composition of the present invention is one having sufficient sensitivity even in a case where active energy rays of low output are irradiated. Accordingly, it is suitable that the curing be performed with an exposure surface illuminance of preferably 10 to 4,000 mW/cm² and more preferably 20 to 2,500 mW/cm².

As the active energy ray source, a mercury lamp, a gas or solid-state laser, or the like is mainly used, and, as the light source used in the curing of the ink composition for ultraviolet ray photocurable-type ink jet recording, a mercury lamp and a metal halide lamp are widely known. However, currently, a move toward becoming mercury free is strongly desirable from the viewpoint of protecting the environment and replacement with GaN-based semiconductor ultraviolet light-emitting devices is extremely effective, industrially and environmentally. In addition, LED (UV-LED) and LD (UV-LD) are compact, have a long life, highly efficiency, and low cost and are anticipated as light sources for photocurable type ink jets.

Further, light emitting diodes (LED) and laser diodes (LD) can be used as active energy ray sources. In particular, in a case where an ultraviolet source is required, an ultraviolet LED and an ultraviolet LD can be used. For example, Nichia Corporation have launched an ultraviolet LED having a wavelength in which the main emission spectrum is between 365 nm and 420 nm. Furthermore, in a case where an even shorter wavelength is necessary, the specification of US6,084,250A discloses an LED capable of emitting active energy rays placed in the center between 300 nm and 370 nm. In addition, other ultraviolet LEDs are available and can irradiate radiation of different ultraviolet ray bands. In the present invention, UV-LED is a particularly preferable active energy ray source, and a UV-LED having a peak wavelength in 340 to 400 nm is particularly preferable.

In addition, the maximum illuminance of the LED on the target recording medium is preferably 10 to 2,000 mW/cm², more preferably 20 to 1,000 mW/cm², and particularly preferably 50 to 800 mW/cm².

The ink composition of the present invention is suitably irradiated by such active energy rays for preferably 0.01 to 120 seconds and more preferably 0.1 to 90 seconds.

The irradiation conditions of the active energy rays and the basic irradiation method are disclosed in JP1985-132767A (JP-S60-132767A). More specifically, light sources are provided on both sides of the head unit including the ejection apparatus of the ink composition and are operated by scanning the head unit and the light sources using a so-called shuttle system. The irradiation of the active energy rays is performed in a fixed time (preferably 0.01 to 0.5 seconds, more preferably 0.01 to 0.3 seconds, and even more preferably 0.01 to 0.15 seconds) after the landing of the ink composition. By controlling the time from the landing of the ink composition to the irradiation of the active energy rays in this manner to be an extremely short time, the ink composition landed on the target recording medium can be prevented from blurring before curing. In addition, since exposure can be performed before the ink composition penetrates to a deep portion which the light source does not reach even with respect to a porous target recording medium, the residue of the unreacted monomer can be suppressed, which is preferable.

Furthermore, the curing may be completed by another light source unaccompanied by driving. Examples of irradiation methods include a method using an optical fiber, and a method in which collimated light is incident to a mirror surface provided in the head unit side surface and UV light is irradiated to the recording unit. Curing methods using these kinds of irradiation methods can also be applied to the ink jet recording method of the present invention.

By adopting the ink jet recording method as described above, even with respect to various target recording media for which the wettability of the surfaces are different, the dot diameter of the landed ink composition can be kept constant and the image quality can be improved. In addition, in order to obtain a color image, it is preferable that colors be superimposed in order of high brightness. By superimposing the colors in order of high brightness, the radiation rays reach the ink composition of the lower part more easily, and favorable curing sensitivity, a reduction in the monomer residue, and an improvement in the adhesion can be expected. Further, with the irradiation of active energy rays, all the colors can be ejected and exposed together; however, exposing one color at a time is preferable from the viewpoint of curing promotion.

In this manner, by curing the ink composition of the present invention with high sensitivity using the irradiation of active energy rays, an image can be formed on the target recording medium surface.

The ink composition of the present invention is preferably used as an ink set formed of a plurality of ink compositions for ink jet recording.

In the ink jet recording method of the present invention, the order of each colored ink composition to be ejected is obviously not limited; however, it is preferable to apply the colored ink compositions to the target recording medium from the ones with high brightness, and, in a case where yellow, cyan, magenta, and black are used (ink composition of the present invention), it is preferable to perform application onto the target recording medium in order of yellow, cyan, magenta, and black (ink composition of the present invention). Further, in a case where white is used in addition to these, it is preferable to perform application onto the target recording medium in order of white, yellow, cyan, magenta, and black (ink composition of the present invention). Furthermore, the present invention is not limited thereto, and an ink set including ink compositions having at least a total of seven colors of yellow, light cyan, light magenta, cyan, magenta, black (ink composition of the present invention), and white can be preferably used, in which case it is preferable to perform application onto the target recording medium in order of white, light cyan, light magenta, yellow, cyan, magenta, and black (ink composition of the present invention).

In the present invention, the target recording medium is not particularly limited and a well-known target recording medium can be used as the support body and the recording material. For example, paper, paper in which plastic (for example, polyethylene, polypropylene, polystyrene, and the like) is laminated, metal plates (for example, aluminum, zinc, copper, and the like), plastic films (for example, cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, polyvinyl acetal, and the like), paper in which the above-described metals are laminated or deposited, plastic films, or the like may be exemplified. In addition, as the target recording medium in the present invention, a non-absorbent target recording medium can be preferably used.

### [Examples]

Examples and comparative examples are shown below, whereby the present invention will be more specifically described. However, the present invention is not limited by these Examples. Here, the "parts" in the following description indicate "parts by mass" unless otherwise noted.

### (Preparation of Dispersions Nos. 1-1 to 1-33, and 2-1 to 2-24)

In the compositions described in the following Table 3 to Table 9, 60 parts of components other than the pigment were stirred (10 to 15 minutes, 2,000 to 3,000 rpm) with a mixer manufactured by Silverson Co., Ltd., and a uniform transparent liquid (dispersing agent diluted solution) was obtained. Pigment was added to the transparent liquid (dispersing agent diluted solution), stirring (10 to 20 minutes, 2,000 to 3,000 rpm) was performed with a mixer, and a uniform preliminary dispersing agent was obtained. Thereafter, a dispersion process was performed using a circulation type bead mill apparatus (Laboratory Mini Mill) manufactured by EIGER CO., Ltd. The dispersion process was performed using 100 parts of zirconia beads with a diameter of 0.65 mm, and as the dispersion conditions, the circumferential velocity set to 15 m/s, and the dispersion time was 30 minutes. In addition, according to the dispersion process, the fact that the volume average particle diameter of the carbon black was 300 nm or less was confirmed using a commercially available particle diameter measuring apparatus (laser diffraction/scattering type particle size distribution measurement apparatus LA-920 manufactured by Horiba Co., Ltd.).

By the above operation, dispersions Nos. 1-1 to 1-33 and 2-1 to 2-24, which are pigment dispersing agents, were obtained.

**Table 3**

| Compositions | | pH | Dispersion No. | | | | | | | | |
|---|---|---|---|---|---|---|---|---|---|---|---|
| | | | 1-1 | 1-2 | 1-3 | 1-4 | 1-5 | 1-6 | 1-7 | 1-8 | 1-9 |
| Carbon black | MA-77 | 2.5 | 40 | - | - | - | - | - | - | - | - |
| | Special Black 4 | 2.8 | - | 40 | - | - | - | - | - | - | - |
| | Nerox 505 | 2.8 | - | - | 40 | - | - | - | - | - | - |
| | Nerox 305 | 2.9 | - | - | - | 40 | - | - | - | - | - |
| | MA-8 | 3.0 | - | - | - | - | 40 | - | - | - | - |
| | MA-100 | 3.5 | - | - | - | - | - | 40 | - | - | - |
| | #1000 | 3.5 | - | - | - | - | - | - | 40 | - | - |
| | Special Black 350 | 4.2 | - | - | - | - | - | - | - | 40 | 40 |
| Dispersing agent | EFKA7701 | | 12 | 12 | 12 | 12 | 12 | 12 | 12 | 12 | 12 |
| Synergist | EFKA6745 | | 1.5 | 1.5 | 1.5 | 1.5 | 1.5 | 1.5 | 1.5 | 1.5 | - |
| Monomer | PEA | | 45.5 | 45.5 | 45.5 | 45.5 | 45.5 | 45.5 | 45.5 | 45.5 | 47 |
| Inhibitor | UV12 | | 1 | 1 | 1 | 1 | 1 | 1 | 1 | 1 | 1 |

**Table 4**

| Compositions | | pH | Dispersion No. | | | | | | | | |
|---|---|---|---|---|---|---|---|---|---|---|---|
| | | | 1-10 | 1-11 | 1-12 | 1-13 | 1-14 | 1-15 | 1-16 | 1-17 | 1-18 |
| Carbon black | MA-77 | 2.5 | 40 | - | - | - | - | - | - | - | - |
| | Special Black 4 | 2.8 | - | 40 | - | - | - | - | - | - | - |
| | Nerox 505 | 2.8 | - | - | 40 | - | - | - | - | - | - |
| | Nerox 305 | 2.9 | - | - | - | 40 | - | - | - | - | - |
| | MA-8 | 3.0 | - | - | - | - | 40 | - | - | - | - |
| | MA-100 | 3.5 | - | - | - | - | - | 40 | - | - | - |
| | #1000 | 3.5 | - | - | - | - | - | - | 40 | - | - |
| | Special Black 350 | 4.2 | - | - | - | - | - | - | - | 40 | 40 |
| Dispersing agent | Byk 9077 | | 12 | 12 | 12 | 12 | 12 | 12 | 12 | 12 | 12 |
| Synergist | EFKA6745 | | 1.5 | 1.5 | 1.5 | 1.5 | 1.5 | 1.5 | 1.5 | 1.5 | - |
| Monomer | PEA | | 45.5 | 45.5 | 45.5 | 45.5 | 45.5 | 45.5 | 45.5 | 45.5 | 47 |
| Inhibitor | UV12 | | 1 | 1 | 1 | 1 | 1 | 1 | 1 | 1 | 1 |

**Table 5**

| Compositions | | pH | Dispersion No. | | | | | | | |
|---|---|---|---|---|---|---|---|---|---|---|
| | | | 1-19 | 1-20 | 1-21 | 1-22 | 1-23 | 1-24 | 1-25 | 1-26 |
| Carbon black | MA-77 | 2.5 | 40 | - | - | - | - | - | - | - |
| | Special Black 4 | 2.8 | - | 40 | - | - | - | - | - | - |
| | Nerox 505 | 2.8 | - | - | 40 | - | - | - | - | - |
| | Nerox 305 | 2.9 | - | - | - | 40 | - | - | - | - |
| | MA-8 | 3.0 | - | - | - | - | 40 | - | - | - |
| | MA-100 | 3.5 | - | - | - | - | - | 40 | - | - |
| | #1000 | 3.5 | - | - | - | - | - | - | 40 | - |
| | Special Black 350 | 4.2 | - | - | - | - | - | - | - | 40 |
| Dispersing agent | Disperbyk 2155 | | 12 | 12 | 12 | 12 | 12 | 12 | 12 | 12 |
| Synergist | EFKA6745 | | 1.5 | 1.5 | 1.5 | 1.5 | 1.5 | 1.5 | 1.5 | 1.5 |
| Monomer | PEA | | 45.5 | 45.5 | 45.5 | 45.5 | 45.5 | 45.5 | 45.5 | 45.5 |
| Inhibitor | UV12 | | 1 | 1 | 1 | 1 | 1 | 1 | 1 | 1 |

**Table 6**

| Compositions | | pH | Dispersion No. | | | | | | |
|---|---|---|---|---|---|---|---|---|---|
| | | | 1-27 | 1-28 | 1-29 | 1-30 | 1-31 | 1-32 | 1-33 |
| Carbon black | #1000 | 3.5 | 40 | - | 40 | - | 40 | - | - |
| | Special Black 350 | 4.2 | - | 40 | - | 40 | - | 40 | 40 |
| Dispersing agent | PB-821 | | 12 | 12 | - | - | - | - | - |
| | Disperbyk 185 | | - | - | 12 | 12 | - | - | 12 |
| | Disperbyk 145 | | - | - | - | - | 12 | 12 | - |
| Synergist | EFKA6745 | | 1.5 | 1.5 | 1.5 | 1.5 | 1.5 | 1.5 | 1.5 |
| Monomer | PEA | | 45.5 | 45.5 | 45.5 | 45.5 | 45.5 | 45.5 | 17 |
| Inhibitor | UV12 | | 1 | 1 | 1 | 1 | 1 | 1 | 1 |

**Table 7**

| Compositions | | pH | Dispersion No. | | | | | | | | | |
|---|---|---|---|---|---|---|---|---|---|---|---|---|
| | | | 2-1 | 2-2 | 2-3 | 2-4 | 2-5 | 2-6 | 2-7 | 2-8 | 2-9 | 2-10 |
| Carbon black | MA-77 | 2.5 | 40 | - | - | - | - | - | - | - | - | - |
| | Special Black 4 | 2.8 | - | 40 | - | - | - | - | - | - | - | - |
| | Nerox 505 | 2.8 | - | - | 40 | - | - | - | - | - | - | - |
| | Nerox 305 | 2.9 | - | - | - | 40 | - | - | - | - | - | - |
| | MA-8 | 3.0 | - | - | - | - | 40 | - | - | - | - | - |
| | MA-100 | 3.5 | - | - | - | - | - | 40 | - | - | - | - |
| | #1000 | 3.5 | - | - | - | - | - | - | 40 | - | - | - |
| | Special Black 350 | 4.2 | - | - | - | - | - | - | - | 40 | - | - |
| | #8300/F | 5.0 | - | - | - | - | - | - | - | - | 40 | - |
| | #40 | 7.5 | - | - | - | - | - | - | - | - | - | 40 |
| Dispersing agent | TEGO685 | | 12 | 12 | 12 | 12 | 12 | 12 | 12 | 12 | 12 | 12 |
| Synergist | Sol5000 | | 1.5 | 1.5 | 1.5 | 1.5 | 1.5 | 1.5 | 1.5 | 1.5 | 1.5 | 1.5 |
| Monomer | PEA | | 45.5 | 45.5 | 45.5 | 45.5 | 45.5 | 45.5 | 45.5 | 45.5 | 45.5 | 45.5 |
| Inhibitor | UV12 | | 1 | 1 | 1 | 1 | 1 | 1 | 1 | 1 | 1 | 1 |

**Table 8**

| Compositions | | pH | Dispersion No. | | | | | | | | | | |
|---|---|---|---|---|---|---|---|---|---|---|---|---|---|
| | | | 2-11 | 2-12 | 2-13 | 2-14 | 2-15 | 2-16 | 2-17 | 2-18 | 2-19 | 2-20 | 2-21 |
| Carbon black | MA-77 | 2.5 | 40 | - | - | - | - | - | - | - | - | - | - |
| | Special Black 4 | 2.8 | - | 40 | - | - | - | - | - | - | - | - | 40 |
| | Nerox 505 | 2.8 | - | - | 40 | - | - | - | - | - | - | - | - |
| | Nerox 305 | 2.9 | - | - | - | 40 | - | - | - | - | - | - | - |
| | MA-8 | 3.0 | - | - | - | - | 40 | - | - | - | - | - | - |
| | MA-100 | 3.5 | - | - | - | - | - | 40 | - | - | - | - | - |
| | #1000 | 3.5 | - | - | - | - | - | - | 40 | - | - | - | - |
| | Special Black 350 | 4.2 | - | - | - | - | - | - | - | 40 | - | - | - |
| | #8300/F | 5.0 | - | - | - | - | - | - | - | - | 40 | - | - |
| | #40 | 7.5 | - | - | - | - | - | - | - | - | - | 40 | - |
| Dispersing agent, | EFKA7731 | | 12 | 12 | 12 | 12 | 12 | 12 | 12 | 12 | 12 | 12 | 12 |
| Synergist | Sol5000 | | 1.5 | 1.5 | 1.5 | 1.5 | 1.5 | 1.5 | 1.5 | 1.5 | 1.5 | 1.5 | - |
| Monomer | PEA | | 45.5 | 45.5 | 45.5 | 45.5 | 45.5 | 45.5 | 45.5 | 45.5 | 45.5 | 45.5 | 47 |
| Inhibitor | UV12 | | 1 | 1 | 1 | 1 | 1 | 1 | 1 | 1 | 1 | 1 | 1 |

**Table 9**

| Compositions | | pH | Dispersion No. | | |
|---|---|---|---|---|---|
| | | | 2-22 | 2-23 | 2-24 |
| Carbon black | Special Black 4 | 2.8 | 40 | 40 | 40 |
| Dispersing agent | PB-822 | | 12 | - | - |
| | Byk 9077 | | - | 12 | - |
| | Disperbyk 116 | | - | - | 12 |
| Synergist | Sol5000 | | 1.5 | 1.5 | 1.5 |
| Monomer | PEA | | 45.5 | 45.5 | 45.5 |
| Inhibitor | UV12 | | 1 | 1 | 1 |

The materials used are shown below.

In addition, the amine value of the dispersing agent was measured in the following manner.

### (Measurement of Amine Value of Dispersing Agent)

The dispersing agent was dissolved in methyl isobutyl ketone, potentiometric titration was performed in a methyl isobutyl ketone solution of perchloric acid of 0.01 mol/L, and the value after conversion to mgKOH/g was set as the amine value. The potentiometric titration was measured using the automatic titrator COM-1500 manufactured by Hiranuma Industrial Co., Ltd.

**Table 10**

| Pigment Name | Supply Source | pH |
|---|---|---|
| MA-100 | Mitsubishi Chemical Corp. | 3.5 |
| MA-77 | Mitsubishi Chemical Corp. | 2.5 |
| MA-8 | Mitsubishi Chemical Corp. | 3.0 |
| #40 | Mitsubishi Chemical Corp. | 7.5 |
| #1000 | Mitsubishi Chemical Corp. | 3.5 |
| #8300/F | Tokai Carbon Corp. | 5.0 |
| Special Black 4 | Evonik Co. Ltd. | 2.8 |
| Special Black 350 | Evonik Co. Ltd. | 4.2 |
| Nerox 305 | Evonik Co. Ltd. | 2.9 |
| Nerox 505 | Evonik Co. Ltd. | 2.8 |

| | | |
|---|---|---|
| pH: values measured based on ASTM D 1512 | | |

**Table 11**

| Dispersing Agent Name | Supply Source | Amine Value (mg KOH/g) |
|---|---|---|
| EFKA7701 | BASF Corporation | 40.0 |
| EFKA7731 | BASF Corporation | 25.1 |
| Byk 9077 | BYK Chemie GmbH | 48.0 |
| Disperbyk 2155 | BYK Chemie GmbH | 48.0 |
| Disperbyk 185 | BYK Chemie GmbH | 18.9 |
| Disperbyk 145 | BYK Chemie GmbH | 70.3 |
| Disperbyk 116 | BYK Chemie GmbH | 65.3 |
| TEGO685 | Evonik Co. Ltd. | 37.4 |
| PB-821 | Ajinomoto Fine-Techno Co., Inc. | 10.3 |
| PB-822 | Ajinomoto Fine-Techno Co., Inc. | 15.3 |

### PEA: SR339C, manufactured by Sartomer Corporation, phenoxyethyl acrylate

UV12: FLORSTAB UV12, manufactured by Kromachem Ltd., nitroso-based polymerization inhibitor
Sol5000: Solsperse5000, manufactured by Lubrizol Co., phthalocyanine sulfonic acid ammonium salt
EFKA6745: Efka6745, manufactured by BASF Corporation, phthalocyanine sulfonic acid ammonium salt

### (Preparation of Ink)

Prepared dispersion solutions 1-1 to 1-33 and 2-1 to 2-24 (90 parts) were added to the diluted solutions A to F (910 parts) prepared in advance and disclosed in the following tables, and stirred (10 to 20 minutes, 2,000 to 3,000 rpm), and a uniform black ink was obtained. Here, the ink after preparation underwent a filtration process using a filter with a pore size of 1.5 µm (Profile Star manufactured by Pall Corporation). The figures in the following table show parts by mass.

In the following Examples, the ink symbols representing the prepared inks indicate the combination of the dispersion No. and the diluted solution. Specifically, for example, ink 1-5A was prepared by mixing and combining the dispersion 1-5 and the diluted solution A.

**Table 12**

| | Diluted Solution | | | | | |
|---|---|---|---|---|---|---|
| | A | B | C | D | E | F |
| NVC | 30 | 20 | 10 | 30 | 20 | 10 |
| CTFA | 30 | 30 | 30 | 17.6 | 27.6 | 37.6 |
| PEA | 16.6 | 26.6 | 36.6 | 30 | 30 | 30 |
| TMPTA | 1 | 1 | 1 | - | - | - |
| UV12 | 0.4 | 0.4 | 0.4 | 0.4 | 0.4 | 0.4 |
| CN964 | 2 | 2 | 2 | 2 | 2 | 2 |
| Irk184 | 3 | 3 | 3 | 3 | 3 | 3 |
| Irg819 | 4 | 4 | 4 | 4 | 4 | 4 |
| ITX | 4 | 4 | 4 | 4 | 4 | 4 |
| Total | 91 | 91 | 91 | 91 | 91 | 91 |

The components used in the above-described table are as follows.
NVC: N-vinyl caprolactam (manufactured by BASF Corporation)
CTFA: cyclic trimethylolpropane formaric acrylate (SR531 manufactured by Sartomer Corporation)
TMPTA: trimethylolpropane triacrylate (SR351 manufactured by Sartomer)
UV12: nitroso-based polymerization inhibitor (FLORSTAB UV-12, manufactured by Kromachem Ltd.)
CN964: urethane diacrylate oligomer (CN964A85 manufactured by Sartomer Corporation)
Irg184: 1-hydroxycyclohexyl phenyl ketone (polymerization initiator, Irgacure 184, manufactured by BASF Corporation)
Irg819: bis(2,4,6-trimethyl benzoyl)phenyl phosphine oxide (polymerization inhibitor, Irgacure 819, manufactured by BASF)
ITX: mixture of 2-isopropyl thioxanthone and 4-isopropyl thioxanthone (sensitizer, Speedcure ITX, manufactured by Lambson Ltd.)

### (Evaluation)

### <Evaluation of Storage Stability (Aluminum Deposited Plastic Pouch)>

1,000 mL of ink was filled into an aluminum deposited plastic pouch (ink pouch used in the UVijet KI ink series (KI004, manufactured by FujiFilm Speciality Ink Systems Ltd.)). By filling the ink after the inside of the pouch had been put into a vacuum state by a vacuum pump before filling, the amount of air in the inner portion of the pouch was minimized. The ink filled pouch was stored for 25 days in a humidity chamber set to a constant temperature, and the storage stability according to the change rate of the viscosity and filtration time were evaluated. Here, the process was performed under conditions in which the temperature of the humidity chamber was 50, 55, and 60°C.

### [Evaluation of Viscosity Stability]

The initial viscosity and the viscosity after time elapsed were measured with a Brookfield type viscometer (digital viscometer LVDV-I+ (Brookfield Ltd.)). Here, the temperature during measurement was set to be 25°C. The evaluation criteria are as follows.
A: viscosity increase rate was within 10%.
B: viscosity increase rate was within 20%.
C: viscosity increase rate was less than 30%.
D: viscosity increase rate was 30% or more.

In addition, here, within 10% (A or better) at 50°C, within 20% (B or better) at 55°C, and less than 30% (C or better) at 60°C are preferable for practical use.

### [Evaluation of Filtration Property]

The filtration time of 50 mL of ink after time elapsed was measured. A polypropylene disc filter (PEPLYN PLUS series (25 mm diameter, 7 µm accuracy) manufactured by Parker Corporation) was used as the filter. The pressure in the container during filtration was set so as to be 400 mBar (40 kPa). Further, the ink was stored in the humidity chamber for approximately 30 minutes in order that the ink temperature immediately before filtration became 25°C. The evaluation criteria are as follows.
A: filtration time of 50 mL was less than 6 minutes.
B: filtration time of 50 mL was 6 minutes or more.

Further, here, it is particularly preferable that the filtration time at 60°C be less than 6 minutes (A), and it is preferable for practical use that the filtration time at 55°C be less than 6 minutes.

### <Evaluation of Adhesion>

A print sample was prepared using a commercially available ink jet printer (LuxelJet UV350GTW, manufactured by Fujifilm Corporation). For the magenta, cyan, and yellow, the UVijet KI ink series (KI867, KI215, KI052, manufactured by FujiFilm Speciality Ink Systems) was used. The above-described prepared ink was filled as the black ink. As the base material, a PVC adhesive base material (Avery MPI 3500, manufactured by Avery Corporation) was used. A monochromatic black solid image which size is larger than 10 cm × 10 cm was created, and the adhesion was evaluated according to the following criteria.
0: 0 points based on JIS K5600-5-6 (ISO2409)
1: 1 point based on JIS K5600-5-6 (ISO2409)
2: 2 points based on JIS K5600-5-6 (ISO2409)
3: 3 points based on JIS K5600-5-6 (ISO2409)
4: 4 points based on JIS K5600-5-6 (ISO2409)
5: 5 points based on JIS K5600-5-6 (ISO2409)

In addition, here, 0 to 2 is preferable for practical use.

**Table 13**

| Ink | | Carbon black | | Dispering Agent | | Synergist | Storage Stability | | | | | | Adhesion |
|---|---|---|---|---|---|---|---|---|---|---|---|---|---|
| | | Type | pH | Type | Amine value (mg KOH/g) | | 50°C | | 55°C | | 60°C | | |
| | | | | | | | Filtration | Viscosity | Filtration | Viscosity | Filtration | Viscosity | |
| 1-1A | Example | MA-77 | 2.5 | EFKA7701 | 40.0 | EFKA6745 | A | A | A | B | A | C | 0 |
| 1-2A | Example | Special Black 4 | 2.8 | EFKA7701 | 40.0 | EFKA6745 | A | A | A | A | A | B | 0 |
| 1-3A | Example | Nerox 505 | 2.8 | EFKA7701 | 40.0 | EFKA6745 | A | A | A | A | A | B | 0 |
| 1-4A | Example | Nerox 305 | 2.9 | EFKA7701 | 40.0 | EFKA6745 | A | A | A | A | A | B | 0 |
| 1-5A | Example | MA-8 | 3.0 | EFKA7701 | 40.0 | EFKA6745 | A | A | A | A | A | A | 0 |
| 1-6A | Example | MA-100 | 3.5 | EFKA7701 | 40.0 | EFKA6745 | A | A | A | A | B | A | 0 |
| 1-7A | Example | #1000 | 3.5 | EFKA7701 | 40.0 | EFKA6745 | A | A | A | A | B | A | 0 |
| 1-8A | Example | Special Black 350 | 4.2 | EFKA7701 | 40.0 | EFKA6745 | A | A | A | A | B | A | 0 |
| 1-9A | Comparative Example | Special Black 350 | 4.2 | EFKA7701 | 40.0 | None | B | A | B | A | B | A | 0 |
| 1-10A | Example | MA-77 | 2.5 | Byk 9077 | 48.0 | EFKA6745 | A | A | A | B | A | C | 0 |
| 1-11A | Example | Special Black 4 | 2.8 | Byk 9077 | 48.0 | EFKA6745 | A | A | A | A | A | B | 0 |
| 1-12A | Example | Nerox 505 | 2.8 | Byk 9077 | 48.0 | EFKA6745 | A | A | A | A | A | B | 0 |
| 1-13A | Example | Nerox 305 | 2.9 | Byk 9077 | 48.0 | EFKA6745 | A | A | A | A | A | B | 0 |
| 1-14A | Example | MA-8 | 3.0 | Byk 9077 | 48.0 | EFKA6745 | A | A | A | A | A | A | 0 |
| 1-15A | Example | MA-100 | 3.5 | Byk 9077 | 48.0 | EFKA6745 | A | A | A | A | A | A | 0 |
| 1-16A | Example | #1000 | 3.5 | Byk 9077 | 48.0 | EFKA6745 | A | A | A | A | A | A | 0 |
| 1-17A | Example | Special Black 350 | 4.2 | Byk 9077 | 48.0 | EFKA6745 | A | A | A | A | A | A | 0 |
| 1-18A | Comparative Example | Special Black 350 | 4.2 | Byk 9077 | 48.0 | None | A | A | B | A | B | A | 0 |
| 1-19A | Example | MA-77 | 2.5 | Disperbyk 2155 | 48.0 | EFKA6745 | A | A | A | B | A | C | 0 |
| 1-20A | Example | Special Black 4 | 2.8 | Disperbyk 2155 | 48.0 | EFKA6745 | A | A | A | A | A | B | 0 |
| 1-21A | Example | Nerox 505 | 2.8 | Disperbyk 2155 | 48.0 | EFKA6745 | A | A | A | A | A | B | 0 |
| 1-22A | Example | Nerox 305 | 2.9 | Disperbyk 2155 | 48.0 | EFKA6745 | A | A | A | A | A | B | 0 |
| 1-23A | Example | MA-8 | 3.0 | Disperbyk 2155 | 48.0 | EFKA6745 | A | A | A | A | A | A | 0 |
| 1-24A | Example | MA-100 | 3.5 | Disperbyk 2155 | 48.0 | EFKA6745 | A | A | A | A | A | A | 0 |
| 1-25A | Example | #1000 | 3.5 | Disperbyk 2155 | 48.0 | EFKA6745 | A | A | A | A | A | A | 0 |
| 1-26A | Example | Special Black 350 | 4.2 | Disperbyk 2155 | 48.0 | EFKA6745 | A | A | A | A | A | A | 0 |
| 1-27A | Comparative Example | #1000 | 3.5 | PB-821 | 10.3 | EFKA6745 | A | A | B | A | B | A | 0 |
| 1-28A | Comparative Example | Special Black 350 | 4.2 | PB-821 | 10.3 | EFKA6745 | B | A | B | A | B | A | 0 |
| 1-29A | Comparative Example | #1000 | 3.5 | Disperbyk 185 | 18.9 | EFKA6745 | A | A | B | A | B | A | 0 |
| 1-30A | Comparative Example | Special Black 350 | 4.2 | Disperbyk 185 | 18.9 | EFKA6745 | B | A | B | A | B | A | 0 |
| 1-31A | Comparative Example | #1000 | 3.5 | Disperbyk< 145 | 70.3 | EFKA6745 | A | A | A | D | A | D | 0 |
| 1-32A | Compantive Example | Special Black 350 | 4.2 | Disperbyk 145 | 70.3 | EFKA6745 | A | A | A | D | A | D | 0 |
| 1-33A | Comparative Example | Special Black 350 | 4.2 | Disperbyk 185 | 18.9 | None | B | A | B | A | B | A | 0 |
| 1-11B | Example | Special Black 4 | 2.8 | Byk 9077 | 48.0 | EFKA6745 | A | A | A | A | A | A | 1 |
| 1-14B | Example | MA-8 | 3.0 | Byk 9077 | 48.0 | EFKA6745 | A | A | A | A | A | A | 1 |
| 1-17B | Example | Special Black 350 | 4.2 | Byk 9077 | 48.0 | EFKA6745 | A | A | A | A | A | A | 1 |
| 1-20B | Example | Special Black 4 | 2.8 | Disperbyk 2155 | 48.0 | EFKA6745 | A | A | A | A | A | A | 1 |
| 1-23B | Example | MA-8 | 3.0 | Disperbyk 2155 | 48.0 | EFKA6745 | A | A | A | A | A | A | 1 |
| 1-26B | Example | Special Black 350 | 4.2 | Disperbyk 2155 | 48.0 | EFKA6745 | A | A | A | A | A | A | 1 |
| 1-11C | Comparative Example | Special Black 4 | 2.8 | Byk 9077 | 48.0 | EFKA6745 | A | A | A | A | A | A | 3 |
| 1-14C | Comparative Example | MA-8 | 3.0 | Byk 9077 | 48.0 | EFKA6745 | A | A | A | A | A | A | 3 |
| 1-17C | Comparative Example | Special Black 350 | 4.2 | Byk 9077 | 48.0 | EFKA6745 | A | A | A | A | A | A | 3 |
| 1-20C | Comparative Example | Special Black 4 | 2.8 | Disperbyk 2155 | 48.0 | EFKA6745 | A | A | A | A | A | A | 3 |
| 1-23C | Comparative Example | MA-8 | 3.0 | Disperbyk 2155 | 48.0 | EFKA6745 | A | A | A | A | A | A | 3 |
| 1-26C | Comparative Example | Special Black 350 | 4.2 | Disperbyk 2155 | 48.0 | EFKA6745 | A | A | A | A | A | A | 3 |

**Table 14**

| Ink | | Carbon black | | Dispersing Agent | | Synergist | Storage Stability | | | | | | Adhesion |
|---|---|---|---|---|---|---|---|---|---|---|---|---|---|
| | | Type | pH | Type | Amine value (mg KOH/g) | | 50°C | | 55°C | | 60°C | | |
| | | | | | | | Filtration | Viscosity | Filtration | Viscosity | Filtration | Viscosity | |
| 2-1E | Example | MA-77 | 2.5 | TEGO685 | 37.4 | Sol5000 | A | A | A | A | A | B | 0 |
| 2-2E | Example | Special Black 4 | 2.8 | TEGO685 | 37.4 | Sol5000 | A | A | A | A | A | A | 0 |
| 2-3E | Example | Nerox 505 | 2.8 | TEGO685 | 37.4 | Sol5000 | A | A | A | A | A | A | 0 |
| 2-4E | Example | Nerox 305 | 2.9 | TEGO685 | 37.4 | Sol5000 | A | A | A | A | A | A | 0 |
| 2-5E | Example | MA-8 | 3.0 | TEGO685 | 37.4 | Sol5000 | A | A | A | A | A | A | 0 |
| 2-6E | Example | MA-100 | 3.5 | TEGO685 | 37.4 | Sol5000 | A | A | A | A | B | A | 0 |
| 2-7E | Example | #1000 | 3.5 | TEGO685 | 37.4 | Sol5000 | A | A | A | A | B | A | 0 |
| 2-8E | Comparative Example | Special Black 350 | 4.2 | TEGO685 | 37.4 | Sol5000 | A | A | B | A | B | A | 0 |
| 2-9E | Comparative Example | #8300/F | 5.0 | TEGO685 | 37.4 | Sol5000 | B | A | B | A | B | A | 0 |
| 2-10E | Comparative Example | #40 | 7.5 | TEGO685 | 37.4 | Sol5000 | B | A | B | A | B | D | 0 |
| 2-11E | Example | MA-77 | 2.5 | EFKA7731 | 25.1 | Sol5000 | A | A | A | A | A | B | 0 |
| 2-12E | Example | Special Black 4 | 2.8 | EFKA7731 | 25.1 | Sol5000 | A | A | A | A | A | A | 0 |
| 2-13E | Example | Nerox 505 | 2.8 | EFKA7731 | 25.1 | Sol5000 | A | A | A | A | A | A | 0 |
| 2-14E | Example | Nerox 305 | 2.9 | EFKA7731 | 25.1 | Sol5000 | A | A | A | A | A | A | 0 |
| 2-15E | Example | MA-8 | 3.0 | EFKA7731 | 25.1 | Sol5000 | A | A | A | A | A | A | 0 |
| 2-16E | Example | MA-100 | 3.5 | EFKA7731 | 25.1 | Sol5000 | A | A | A | A | B | A | 0 |
| 2-17E | Example | #1000 | 3.5 | EFKA7731 | 25.1 | Sol5000 | A | A | A | A | B | A | 0 |
| 2-18E | Comparative Example | Special Black 350 | 4.2 | EFKA7731 | 25.1 | Sol5000 | A | A | B | A | B | A | 0 |
| 2-19E | Comparative Example | #8300/F | 5.0 | EFKA7731 | 25.1 | Sol5000 | B | A | B | A | B | A | 0 |
| 2-20E | Comparative Example | #40 | 7.5 | EFKA7731 | 25.1 | Sol5000 | B | A | B | A | B | D | 0 |
| 2-23E | Example | Special Black 4 | 2.8 | Byk 9077 | 48.0 | Sol5000 | A | A | A | A | A | A | 0 |
| 2-2D | Example | Special Black 4 | 2.8 | TEGO685 | 37.4 | Sol5000 | A | A | A | A | A | B | 1 |
| 2-5D | Example | MA-8 | 3.0 | TEGO685 | 37.4 | Sol5000 | A | A | A | A | A | A | 1 |
| 2-8D | Comparative Example | Special Black 350 | 4.2 | TEGO685 | 37.4 | Sol5000 | A | A | B | A | B | A | 1 |
| 2-12D | Example | Special Black 4 | 2.8 | EFKA7731 | 25.1 | Sol5000 | A | A | A | A | A | B | 1 |
| 2-15D | Example | MA-8 | 3.0 | EFKA7731 | 25.1 | Sol5000 | A | A | A | A | A | A | 1 |
| 2-18D | Comparative Example | Special Black 350 | 4.2 | EFKA7731 | 25.1 | Sol5000 | A | A | B | A | B | A | 1 |
| 2-2F | Comparative Example | Special Black 4 | 2.8 | TEGO685 | 37.4 | Sol5000 | A | A | A | A | A | A | 3 |
| 2-5F | Comparative Example | MA-8 | 3.0 | TEGO685 | 37.4 | Sol5000 | A | A | A | A | A | A | 3 |
| 2-8F | Comparative Example | Special Black 350 | 4,2 | TEGO685 | 37.4 | Sol5000 | A | A | A | A | A | A | 3 |
| 2-12F | Comparative Example | Special Black 4 | 2.8 | EFKA7731 | 25.1 | Sol5000 | A | A | A | A | A | A | 3 |
| 2-15F | Comparative Example | MA-8 | 3.0 | EFKA7731 | 25.1 | Sol5000 | A | A | A | A | A | A | 3 |
| 2-18F | Comparative Example | Special Black 350 | 4.2 | EFKA7731 | 25.1 | Sol5000 | A | A | A | A | A | A | 3 |

### <Evaluation of storage stability (screw cap bottle made of glass)>

90 mL of black ink was put into a screw cap bottle (100 mL) made of glass and the cap was fastened tightly, stored in a humidity chamber set to a constant temperature for 25 days, and the storage stability according to the change rate of the viscosity and filtration time were evaluated. Here, the process was performed under conditions in which the temperature of the humidity chamber was 50°C, 55°C, and 60°C.

**Table 15**

| Ink | | Carbon black | | Dispersing Agent | | Synergist | Storage Stability | | | | | | Adhesion |
|---|---|---|---|---|---|---|---|---|---|---|---|---|---|
| | | Type | pH | Type | Amine | | 50°C | | 55°C | | 60°C | | |
| | | | | | value(mg KOH/g) | | Filtration | Viscosity | Filtration | Viscosity | Filtration | Viscosity | |
| 1-2A | Example | Special Black 4 | 2.8 | EFKA7701 | 40.0 | EFKA6745 | A | A | A | B | B | C | 0 |
| 1-8A | Example | Special Black 350 | 4.2 | EFKA7701 | 40.0 | EFKA6745 | A | A | A | B | B | C | 0 |
| 2-2E | Example | Special Black 4 | 2.8 | TEGO685 | 37.4 | Sol5000 | A | A | A | B | B | C | 0 |
| 2-5E | Example | MA-8 | 3.0 | TEGO685 | 37.4 | Sol5000 | A | A | A | B | B | C | 0 |

## Claims

1. An ink composition for ink jet recording comprising:
a pigment comprising carbon black;
a basic polymeric pigment dispersing agent;
15 mass% or more, based on the entire ink composition, of N-vinyl caprolactam as a polymerizable compound; and a phthalocyanine sulfonic acid ammonium salt;
wherein the pH of the carbon black is 2.0 or more to 3.5 or less, and the amine value of the basic polymeric pigment dispersing agent is 25 mg KOH/g or more to less than 40 mg KOH/g.

2. An ink composition according to Claim 1, wherein the content of the basic polymeric pigment dispersing agent is 20% or more to 50% or less with respect to 100 mass% of the pigment in the ink composition.

3. An ink composition according to Claim 1 or Claim 2, wherein the content of the carbon black is 3 mass% or more to 5 mass% or less of the entire ink composition.

4. An ink composition according to any preceding claim, wherein the N-vinyl caprolactam is contained in an amount of 15 mass% or more and 80 mass% or less of the entire ink composition.

5. An ink composition according to Claim 4, wherein the N-vinyl caprolactam is contained in an amount of 15 mass% or more and 30 mass% or less of the entire ink composition.

6. An ink pack filled with an ink composition as defined in any preceding claim, wherein the ink pack is an aluminum deposited plastic pouch.

7. An ink jet recording method comprising:
(a) ejecting an ink composition as defined in any of Claims 1 to 5 onto a target recording medium, and
(b) curing the ink composition by irradiating the ejected ink composition with active radiation rays.

## Patentansprüche

1. Tintenzusammensetzung für die Tintenstrahlaufzeichnung, umfassend:
ein Pigment, umfassend Ruß;
ein basisches polymeres Pigment-Dispergiermittel;
15 Masse-% oder mehr, bezogen auf die gesamte Tintenzusammensetzung, N-Vinylcaprolactam als polymerisierbare Verbindung; und
ein Phthalocyaninsulfonsäure-Ammoniumsalz;
worin der pH-Wert des Rußes 2,0 oder höher bis 3,5 oder niedriger beträgt und der Aminwert des basischen polymeren Pigment-Dispergiermittels 25 mg KOH/g oder mehr bis weniger als 40 mg KOH/g beträgt.

2. Tintenzusammensetzung gemäß Anspruch 1, worin der Mengenanteil des basischen polymeren Pigment-Dispergiermittels 20 % oder mehr bis 50 % oder weniger in Bezug auf 100 Masse-% des Pigments in der Tintenzusammensetzung beträgt.

3. Tintenzusammensetzung gemäß Anspruch 1 oder Anspruch 2, worin der Mengenanteil des Rußes 3 Masse-% oder mehr bis 5 Masse-% oder weniger der gesamten Tintenzusammensetzung beträgt.

4. Tintenzusammensetzung gemäß irgendeinem vorhergehenden Anspruch, worin das N-Vinylcaprolactam in einer Menge von 15 Masse-% oder mehr und 80 Masse-% oder weniger der gesamten Tintenzusammensetzung enthalten ist.

5. Tintenzusammensetzung gemäß Anspruch 4, worin das N-Vinylcaprolactam in einer Menge von 15 Masse-% oder mehr und 30 Masse-% oder weniger der gesamten Tintenzusammensetzung enthalten ist.

6. Tintenpack, gefüllt mit einer Tinterizusammensetzung, wie sie in irgendeinem vorhergehenden Anspruch definiert ist, worin das Tintenpack ein Kunststoffbeutel ist, auf dem Aluminium abgeschieden ist.

7. Tintenstrahl-Aufzeichnungsverfahren, umfassend:
(a) Ausstoßen einer wie in irgendeinem der Ansprüche 1 bis 5 definierten Tintenzusammensetzung auf ein Ziel-Aufzeichnungsmedium und
(b) Härten der Tintenzusammensetzung durch Bestrahlen der ausgestoßenen Tintenzusammensetzung mit aktiven Strahlungsstrahlen.

## Revendications

1. Composition d'encre pour enregistrement à jet d'encre comprenant :
un pigment comprenant du noir de carbone ;
un agent dispersant de pigment polymère basique ;
15 % en masse ou plus, par rapport à la composition d'encre totale, de N-vinylcaprolactame en tant que composé polymérisable ; et
un sel d'ammonium d'acide phtalocyanine-sulfonique ;
dans laquelle le pH du noir de carbone est de 2 ou plus à 3,5 ou moins, et la valeur d'amine de l'agent dispersant de pigment polymère basique est de 25 mg de KOH/g ou plus à moins de 40 mg de KOH/g.

2. Composition d'encre selon la revendication 1, dans laquelle la teneur de l'agent dispersant de pigment polymère basique est de 20 % ou plus à 50 % ou moins pour 100 % en masse du pigment dans la composition d'encre.

3. Composition d'encre selon la revendication 1 ou la revendication 2, dans laquelle la teneur du noir de carbone est de 3 % en masse ou plus à 5 % en masse ou moins de la composition d'encre totale.

4. Composition d'encre selon l'une quelconque revendication précédente, dans laquelle le N-vinylcaprolactame est contenu en une quantité de 15 % en masse ou plus et de 80 % en masse ou moins de la composition d'encre totale.

5. Composition d'encre selon la revendication 4, dans laquelle le N-vinylcaprolactame est contenu en une quantité de 15 % en masse ou plus et de 30 % en masse ou moins de la composition d'encre totale.

6. Paquet d'encre rempli d'une composition d'encre telle que définie dans une quelconque revendication précédente, dans laquelle le paquet d'encre est une poche en plastique à dépôt d'aluminium.

7. Procédé d'enregistrement à jet d'encre comprenant :
(a) l'éjection d'une composition d'encre telle que définie dans l'une quelconque des revendications 1 à 5 sur un support d'enregistrement cible, et
(b) le durcissement de la composition d'encre par irradiation de la composition d'encre éjectée avec des rayons de rayonnement actifs.
